# EUROPEAN PATENT SPECIFICATION

(11) **EP 2 586 303 B1**
(45) Date of publication and mention of the grant of the patent: **12.08.2015**
(21) Application number: 12006685.7
(22) Date of filing: 25.09.2012
(51) Int. Cl.: A01M 7/00, B05B 7/04, B05B 7/06, B05B 7/24

(54) **Mist blower**
Nebelgebläse
Brumisateur

(30) Priority: 25.10.2011 JP 2011234042
(43) Date of publication of application: 01.05.2013
(73) Proprietor: Makita Corporation, Anjo-shi, Aichi 446-8502 (JP)
(72) Inventor: Miura, Masahiko, Numazu-shi Shizuoka 4108535 (JP); Shimooka, Ryouichi, Numazu-shi Shizuoka 4108535 (JP)
(74) Representative: Müller-Boré & Partner Patentanwälte PartG mbB

(56) References cited:
- EP-A2- 2 248 594
- JP-U- H0 347 053

## Description

### BACKGROUND

### 1. Technical Field

The present invention relates to a mist blower having a blast pipe and configured to spray chemical liquid such as pesticide by mixing the chemical liquid into the air discharged from the blast pipe.

### 2. Related Art

Conventionally, a mist blower having a blast pipe has been known as disclosed, for example, in Japanese Utility Model Application Laid-Open No.HEI03-47053. The blast pipe allows the air supplied from a fan to flow through and to be discharged from its end. Then, chemical liquid such as pesticide is mixed into the air discharged from the blast pipe to spray the chemical liquid. A diffusion cover is mounted to the front end of the blast pipe to radially outwardly diffuse the air containing the chemical liquid, which is being discharged from the blast pipe.

The diffusion cover has a plurality of fins spaced apart from each other. A predetermined angle is formed by each fin and the surface of the diffusion cover. In order to widely spray the chemical liquid discharged from the blast pipe, it is necessary to radially outwardly tilt each fin of the diffusion cover to the blast pipe. However, if each fin is tilted radially outward to the blast pipe, the aperture ratio of the diffusion cover decreases, so that the flow resistance of the air containing the chemical liquid which is being discharged from the blast pipe increases. Therefore, it is not possible to widely spray chemical liquid while the spraying distance of the chemical liquid is maintained unless it is ensured to increase the flow rate of the air being discharged from the blast pipe. By the way, a mist blower may need to replace the diffusion cover, or may need to be used without the diffusion cover by removing the diffusion cover from the end of the blast pipe. However, with the cited mist blower, the diffusion cover is integrally formed with the blast pipe, so that it is not possible to detach the diffusion cover from the end of the blast pipe.

### SUMMARY

It is therefore an object of the present invention to provide a mist blower that can widely spray chemical liquid by ensuring that the air containing the chemical liquid, which is being discharged from the blast pipe, is diffused radially outward without increasing the supplied air flow. Another object of the present invention is to provide a mist blower with a diffusion cover that can be attached and detached easily.

In order to achieve the above-described object, the present invention provides a mist blower for spraying chemical liquid including: a blast pipe configured to allow air supplied from a fan to flow through and to be discharged from an front end of the blast pipe, the chemical liquid being sprayed by mixing the chemical liquid into the air flowing through the blast pipe; and a diffusion cover provided in the front end of the blast pipe to radially outwardly diffuse the air containing the chemical liquid which is being discharged from the blast pipe. The diffusion cover includes: a flow directing fin configured to direct flow of the air containing the chemical liquid which is being discharged from the blast pipe; and a diffusion fin configured to tilt radially outward with a greater angle than of the directing fins and to radially outwardly guide part of the air containing the chemical liquid.

By this means, part of the air containing chemical liquid is guided radially outward by the diffusion fin, so that it is possible to radially outwardly discharge the part of the air containing chemical liquid without reducing the aperture ratio of the diffusion cover.

Preferably, a protrusion part extending radially is provided in an outer circumference of the diffusion cover; and an locking piece is provided on an end of the blast pipe, the locking piece being able to engage the protrusion part by rotating the diffusion cover while the diffusion cover contacts the end of the blast pipe to detachably attach the diffusion cover to the end of the blast pipe.

By this means, the protrusion part engages the locking piece by rotating the diffusion cover while the diffusion cover contacts the end of the blast pipe to detachably attach the diffusion cover to the blast pipe.

With the present invention, it is possible to radially outwardly discharge part of the air and chemical liquid by the diffusion fins without reducing the aperture ratio of the diffusion cover. Therefore, there is no need to increase the supplied air flow in order to widely spray chemical liquid. Consequently, it is possible to reduce the weight of the apparatus. In addition, the diffusion cover can be easily attached to and detached from the blast pipe by rotating the diffusion cover. By this means, it is possible to improve the efficiency of work to replace the diffusion cover and the efficiency of work in a case the diffusion cover needs to be removed.

### BRIEF DESCRIPTION OF THE DRAWINGS

Fig. 1 is a perspective view showing a mist blower according to an embodiment of the present invention;
Fig. 2 is a cross-sectional view showing main parts of a blast pipe;
Fig. 3 is a front view showing a diffusion cover;
Fig. 4 is a cross-sectional view of Fig. 3 taken along A-A' line; and
Fig. 5 is a drawing showing a method of attaching a diffusion cover to the blast pipe.

### DESCRIPTION OF EXEMPLARY EMBODIMENTS

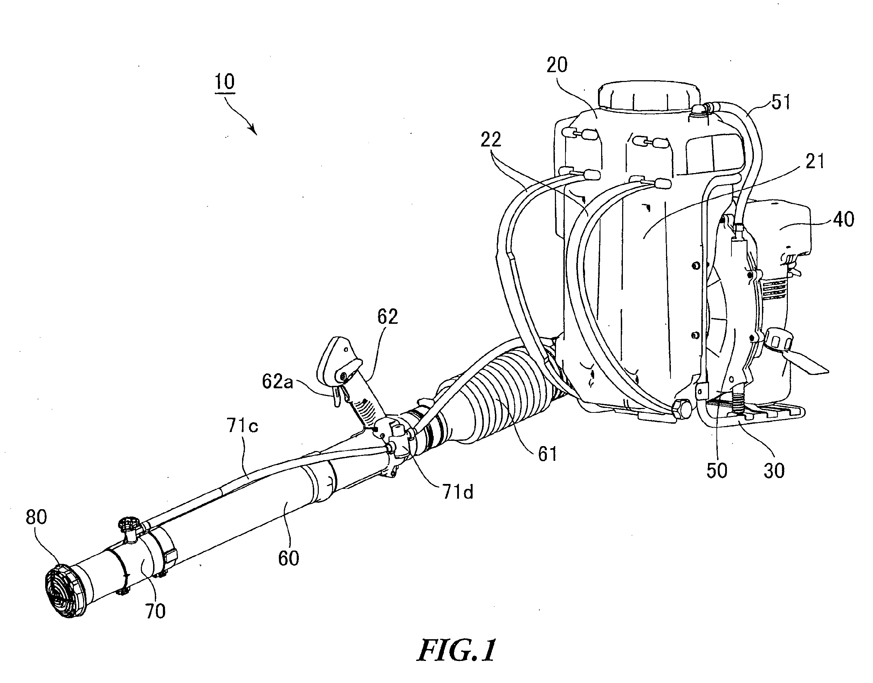

Fig. 1 to Fig. 5 show an embodiment of the present invention.

A mist blower 10 according to the present invention is used to spray liquid such as chemical liquid, being carried by the user on the user's back.

As shown in Fig. 1, this mist blower 10 includes: a liquid tank 20 located in the front side; a frame 30 attached to the liquid tank 20 and extending backward from the bottom surface side of the liquid tank 20; an engine 40 located behind the frame 30; a fan 50 located between the liquid tank 20 and the engine 40; and a blast pipe 60 extending forward from the right side of the fan 50.

The liquid tank 20 is formed to be hollow and extends in the vertical direction. Chemical liquid to be sprayed is stored in this liquid tank 20. A back pat part 21 is provided on the front surface of the liquid tank 20. This back pad part 21 has shoulder belts 22 which are to be put on the shoulders of the user when the user carries the mist blower 10 on the user' s back.

The frame 30 is formed of a tubular member bending such that the tubular member extends in the vertical direction along both left and right sides of the liquid tank 20, bends at the lower ends of the right and left sides and extends backward. Plate members are bridged on both sides of the frame 30 in the width direction of the frame 30, which extend backward. An engine 40 and a fan 50 are mounted on these plate members.

The engine 40 is a four-stroke engine and serves as a power source to drive the fan 50.

The fan 50 is a centrifugal fan whose rotating shaft is coupled to the engine 40. The blast pipe 60 is connected to the right side of the fan 50. In addition, one end of a pressurized pipe 51 to pressurize the liquid tank 20 is connected to the fan 50, and the other end is connected to the upper part of the liquid tank 20.

The blast pipe 60 is formed of a cylindrical member and connected to the fan 50 via a flexible accordion tube 61. A handle 62 is formed to extend upward from the outer circumference of the blast pipe 60. The handle 62 is grasped by the right hand of the user. A throttle lever 62a is provided on the upper part of the handle 62, which can be operated by the user grasping the handle 62. The rate of rotation of the engine 40 can be controlled by operating the throttle lever 62a.

A mixing part 70 is provided apart from the front end of the blast pipe 60 in the front end side. This mixing part 70 mixes chemical liquid into the air flowing through the blast pipe 60.

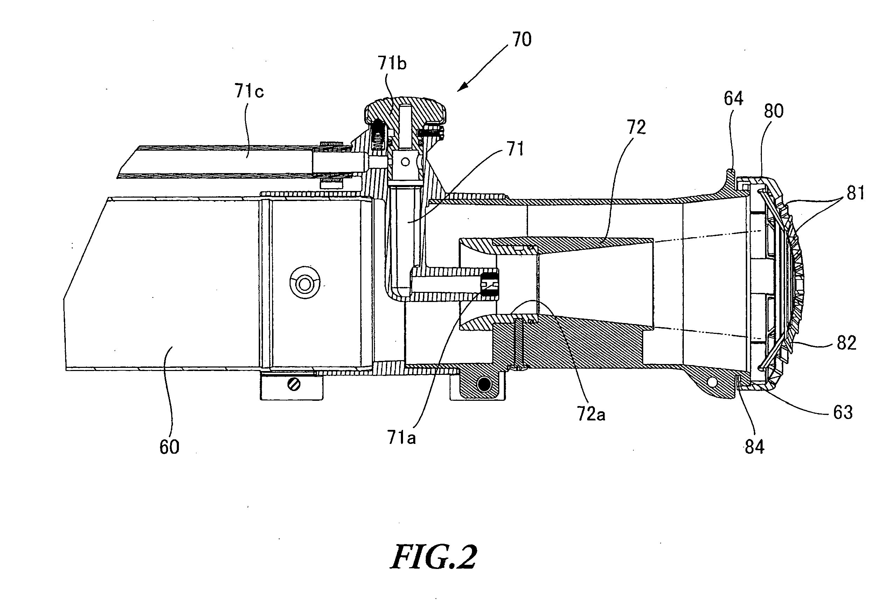

As shown in Fig. 2, the mixing part 70 includes a chemical liquid duct 71 that allows chemical liquid to flow in the blast pipe 60 from the outside; and a venturi part 72 that is provided in the downstream side of the chemical liquid duct 71 to mix the chemical liquid flowing through the chemical liquid duct 71 into the air by venturi effect.

The chemical liquid duct 71 extends from the outer circumference of the blast pipe 60 to the radial center of the blast pipe 60, bends and extends to the front end side of the blast pipe 60. In this way, the chemical liquid duct 71 is located in the blast pipe 60. Here, a nozzle 71a to jet chemical liquid into the blast pipe 60 is provided in the end of the chemical liquid duct 71 in the output side. Meanwhile, a cock 71b to open and close the chemical liquid duct 71 is provided in the input side of the chemical liquid duct 71. In addition, a liquid delivery pipe 71c that allows the chemical liquid in the liquid tank 20 to flow into the chemical liquid duct 71, is connected to the end of the chemical liquid duct 71 in the input side. As shown in Fig. 1, the liquid delivery pipe 71c is provided with a duct on-off valve 71d to open and close the chemical liquid duct 71.

As shown in Fig. 2, the venturi part 72 is formed in an approximately cylindrical shape in the blast pipe 60 and extends along the same direction as of the blast pipe 60. The venturi part 72 has a smaller outer diameter than the inner diameter of the blast pipe 60 and is placed at an approximately center of the blast pipe 60 in the radial direction of the blast pipe 60. The inner diameter of the venturi part 72 is minimized at a constricted part 72a. The inner diameter of the venturi part 72 gradually increases from the constricted part 72a to both the base end side and the front end side. In the venturi part 72, the end of the chemical liquid duct 71 in the output side is located at an approximately center of the constricted part 72a in the radial direction of the constricted part 72a. Here, the venturi part 72 has an approximately cylindrical shape. The approximately cylindrical shape includes, for example, a frusto-conical shape whose outer diameter gradually increases toward the downstream side.

A diffusion cover 80 is provided at the front end of the blast pipe 60. While the air into which chemical liquid has been mixed by the mixing part 70, is being discharged from the blast pipe 60, this diffusion cover 80 is used to radially outwardly diffuse the air from the blast pipe 60.

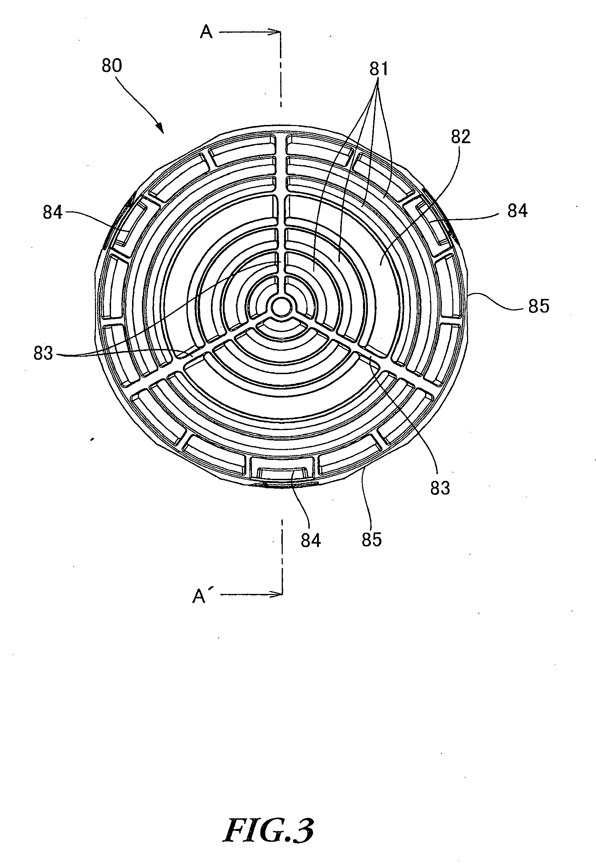

As shown in Fig. 2, the diffusion cover 80 is formed of a dome-shaped member projecting from the opening in the front end of the blast pipe 60 in the direction in which air is discharged. The diffusion cover 80 includes: a plurality of ring-shaped flow directing fins 81 arranged concentrically as shown in Fig. 3; a diffusion fin 82 formed of a ring along the circumference corresponding to an extension of the inner surface of the venturi part 72, which is defined by the two-dot chain lines ; and a plurality of connecting parts 83 that extend radially outward from the radial center of the diffusion cover 80 and connect between the sections of each flow directing fins 81 and also between the sections of the diffusion fin 82 as shown in Fig. 3.

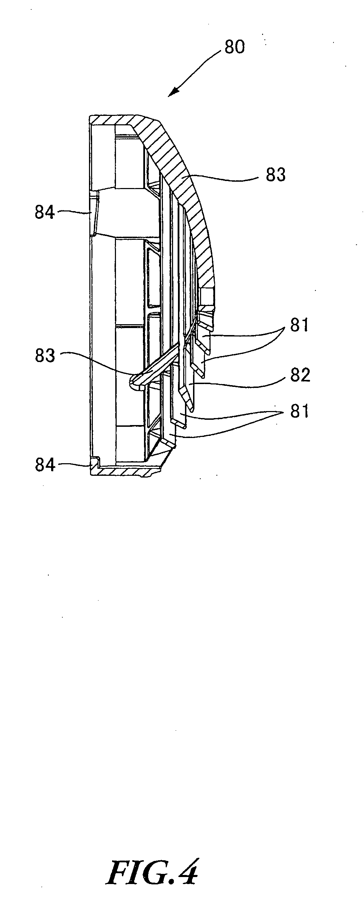

As shown in Fig. 4, the flow directing fins 81 radially outwardly tilt to the surface of the diffusion cover 80 at a predetermined same angle. Meanwhile, the diffusion fins 82 radially outwardly tilt to the surface of the diffusion cover 80 at a greater angle than the angle of tilt of each flow directing fin 81.

A plurality of protrusion parts 84 are provided on the outer circumference of the diffusion cover 80 such that the plurality of protrusion parts 84 extend radially inward and are apart from each other in the circumference direction. Each protrusion part 84 is formed to have a thickness that increases toward one direction along the circumference of the diffusion cover 80. A protrusion part 84 engages an locking piece 63 provided on the front end of the blast pipe 60 by rotating the diffusion cover 80 in the other direction along the circumference of the diffusion cover 80 while the outer circumference of the diffusion cover 80 contacts the front end of the blast pipe 60. In addition, a plurality of grippers 85 are provided on the outer circumference of the diffusion cover 80. These grippers 85 are apart from each other to be able to be held by the fingers of the user.

A flange 64 is formed along the outer circumference of the blast pipe 60 to extend radially outward in the base end side of the locking piece 63. The outer diameter of the flange 64 is greater than that of the diffusion cover 80.

When being driven by the engine 40 in the mist blower having the above-described configuration, the fan 50 sucks in the air surrounding the fan 50, and allows the sucked air to flow through the blast pipe 60 and to be discharged from the front end of the blast pipe 60. The amount of air flow discharged from the front end of the blast pipe 60 can be controlled by operating the throttle lever 62a. In this state, when the chemical liquid duct 71 is opened by operating the duct on-off valve 71d, the chemical liquid in the liquid tank 20 is mixed with the air flowing through the blast pipe 60 in the mixing part 70 and discharged from the front end of the blast pipe 60.

At this time, part of the air flowing through the front end side of the blast pipe 60 flows into the venturi part 72. The pressure in the air flowing into the venturi part 72 reduces as the flow velocity increases in the constricted part 72a. Therefore, the chemical liquid in the chemical liquid duct 71 is sucked from the nozzle 71a located in the constricted part 72a, mixed with the air in the venturi part 72, and then discharged from the front end of the blast pipe 60.

Then, the diffusion cover 80 guides the air containing the chemical liquid which is being discharged from the front end of the blast pipe 60. Most of the air and chemical liquid which is being discharged from the front end of the blast pipe 60 is guided radially outward by the flow directing fins 81 at a predetermined angle from the surface of the diffusion cover 80. In addition, the air containing the chemical liquid flowing along the inner surface of the venturi part 72 is guided radially outward by the diffusion fin 82 at a greater angle than the angle formed by the flow directing fins 81. By this means, the air containing chemical liquid, which is flowing along the outermost inner surface of the venturi part 72, is guided radially outward by the diffusion fin 82, so that the chemical liquid discharged from the front end of the blast pipe 60 is sprayed widely.

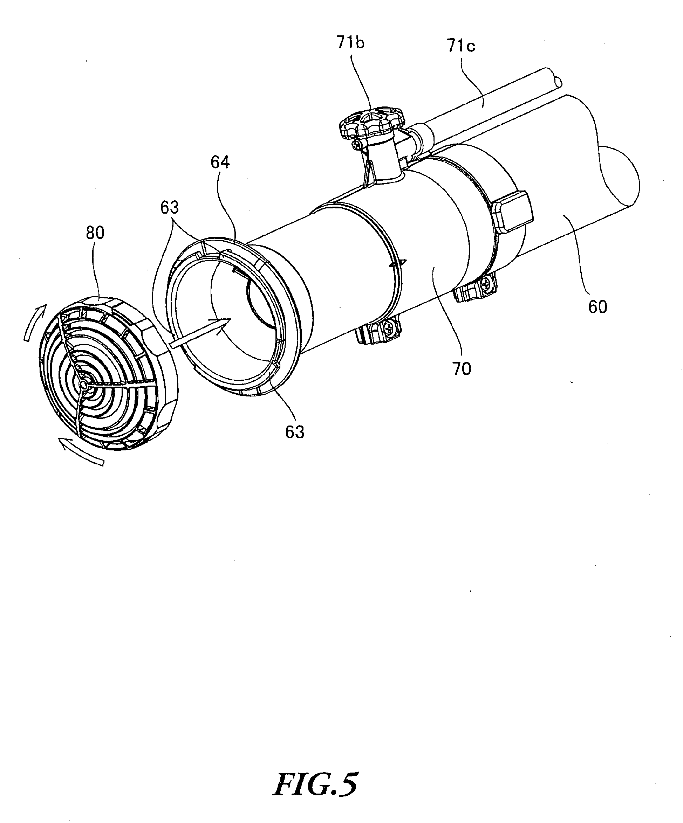

As shown in Fig. 5, the diffusion cover 80 is rotated after the outer circumference of the diffusion cover 80 contacts the end of the blast pipe 60, and then the protrusion parts 84 are engaged with the locking pieces 63, so that the diffusion cover 80 is attached to the blast pipe 60. The diffusion cover 80 is rotated with respect to the blast pipe 60 to switch between to engage and to disengage the protrusion parts 84 with the locking pieces 63. Thus, the diffusion cover 80 can be attached to and detached from the blast pipe 60, if necessary.

As described above, the diffusion cover 80 of the mist blower according to the present invention includes: the flow directing fins 81 that direct the air and chemical liquid discharged from the end of the blast pipe 60; and the diffusion fin 82 that is formed to tilt radially outward with a greater angle than of the flow directing fins 81 and directs the air and chemical liquid to diffuse radially outward. Therefore, it is possible to radially outwardly discharge part of the air containing chemical liquid by the diffusion fin 82, without reducing the aperture ratio of the diffusion cover 80. Accordingly, there is no need to increase an amount of supplied air in order to widely spray chemical liquid, and consequently it is possible to reduce the weight of the apparatus.

In addition, the diffusion fin 82 is formed of a ring along the circumference corresponding to an extension of the inner surface of the venturi part 72. By this means, the air containing chemical liquid, which is flowing along the outermost inner surface of the venturi part 72, can be discharged radially outward from the blast pipe 60. This ensures that chemical liquid is widely sprayed radially outward from the radial center of the blast pipe 6.

In addition, the protrusion parts 84 protruding radially inward are provided in the outer circumference of the diffusion cover 80. Meanwhile, the locking pieces 63 extending outward are provided on the end of the blast pipe 60. These locking pieces 63 can be engaged with the protrusion parts 84 by rotating the blast pipe 60 while the diffusion cover 80 contacts the end of the blast pipe 60 to detachably attach the diffusion cover 80 to the end of the blast pipe 60. This allows the diffusion cover 80 to be reliably attached to the blast pipe 60, so that it is possible to prevent the diffusion cover 80 from detaching accidentally from the blast pipe 60 because the diffusion cover 80 touches something. In addition, the diffusion cover 80 is easily removed from the blast pipe 60, and therefore it is possible to improve the efficiency of work to replace the diffusion cover and the efficiency of work in a case the diffusion cover 80 needs to be removed.

Moreover, the flange 64 having a greater outer diameter than that of the diffusion cover 80 is provided in the front end side of the blast pipe 60. By this means, when the front end of the blast pipe 60 touches something, the flange 64 can protect the front edge. Therefore, it is possible to prevent the diffusion cover 80 from touching something directly and detaching from the blast pipe 60.

Although with the embodiment, a configuration is adopted where one diffusion fin 82 is provided in the diffusion cover 80, it is by no means limiting. Another configuration is possible where, for example, a plurality of diffusion fins are provided as long as they are formed in the vicinity of the circumference corresponding to an extension of the inner surface of the venturi part 72.

In addition, with the embodiment, a configuration is adopted where the venturi part 72 is provided in approximately the radial center of the blast pipe 60, and the ring-shaped diffusion fin 82 is formed about the radial center of the diffusion cover 80. However, it is by no means limiting. Another configuration is possible where, for example, the venturi part 72 and the diffusion fin 82 are provided out of the center of the blast pipe 60 and the diffusion cover 80 as long as the venturi part 72 and the diffusion fin 82 are provided to align with one another.

Moreover, although with the embodiment, a configuration is adopted where the protrusion parts 84 extend radially inward from the outer circumference of the diffusion cover 80, it is by no means limiting. Another configuration is possible where the protrusion parts 84 are formed to extend radially outward from the outer circumference of the diffusion cover 80 while the locking pieces 63 which can be engaged with the protrusion parts 84 extending radially outward, are provided in the blast pipe 60.

## Claims

1. A mist blower (10) for spraying chemical liquid, comprising:
a blast pipe (60) configured to allow air supplied from a fan (50) to flow through and to be discharged from an front end of the blast pipe (60), the chemical liquid being sprayed by mixing the chemical liquid into the air flowing through the blast pipe (60); and
a diffusion cover (80) provided in the front end of the blast pipe (60) to radially outwardly diffuse the air containing the chemical liquid which is being discharged from the blast pipe (60),
wherein the diffusion cover (80) includes:
a flow directing fin (81) configured to direct flow of the air containing the chemical liquid which is being discharged from the blast pipe (60); **characterized by**
a diffusion fin (82) configured to tilt radially outward with a greater angle to the surface of the diffusion cover (80) than that of the directing fins (81) and to radially outwardly guide part of the air containing the chemical liquid.

2. The mist blower according to claim 1, wherein:
a venturi part (72) having an approximately cylindrical shape is provided in the blast pipe (60) near the front end, the venturi part (72) mixing the chemical liquid into the air by venturi effect; and
the diffusion fin (82) is formed along a circumference corresponding to an extension of an inner surface of the venturi part (72) having the approximately cylindrical shape.

3. The mist blower (10) according to claim 1 or 2, wherein:
a protrusion part (84) extending radially is provided in an outer circumference of the diffusion cover (80); and
a locking piece (63) is provided on an end of the blast pipe (60), the locking piece (63) being able to engage the protrusion part (84) by rotating the diffusion cover (80) while the diffusion cover (80) contacts the end of the blast pipe (60) to detachably attach the diffusion cover (80) to the end of the blast pipe (60).

4. The mist blower (10) according to claim 3, wherein a flange (64) is provided in the front end side of the blast pipe (60), an outer diameter of the flange (64) being greater than that of the diffusion cover (80).

## Patentansprüche

1. Nebelgebläse (10) zum Sprühen einer chemischen Flüssigkeit, das umfasst:
ein Blasrohr (60), das aufgebaut ist, um zuzulassen, dass Luft, die von einem Ventilator (50) zugeführt wird, hindurch strömt und von einem vorderen Ende des Blasrohrs (60) abgegeben wird, wobei die chemische Flüssigkeit gesprüht wird, indem die chemische Flüssigkeit in die Luft gemischt wird, die durch das Blasrohr (60) strömt; und
eine Diffusionsabdeckung (80), die in dem vorderen Ende des Blasrohrs (60) bereitgestellt ist, um die Luft, die die chemische Flüssigkeit enthält, die von dem Blasrohr (60) abgegeben wird, radial auswärts auszubreiten;
wobei die Diffusionsabdeckung (80) umfasst:
eine Strömungsleitrippe (81), die aufgebaut ist, um die Strömung der Luft, die die chemische Flüssigkeit enthält, die von dem Blasrohr (60) abgegeben wird, zu leiten; **gekennzeichnet durch**
eine Diffusionsrippe (81), die aufgebaut ist, um sich radial in einem größeren Winkel zu der Fläche der Diffusionsabdeckung (80) als dem der Leitrippen (81) zu neigen und einen Teil der Luft, die die chemische Flüssigkeit enthält, radial auswärts zu leiten.

2. Nebelgebläse nach Anspruch 1, wobei:
in dem Blasrohr (60) nahe dem Vorderende ein Venturi-Teil (72) mit einer ungefähr zylindrischen Form bereitgestellt ist, wobei der Venturi-Teil (72) die chemische Flüssigkeit durch den Venturi-Effekt in die Luft mischt; und
die Diffusionsrippe (82) entlang eines Umfangs ausgebildet ist, der einer Ausdehnung einer Innenfläche des Venturi-Teils (72) mit der ungefähr zylindrischen Form entspricht.

3. Nebelgebläse (10) nach Anspruch 1 oder 2, wobei:
ein Vorsprungteil (84), der sich radial erstreckt, in einem Außenumfang der Diffusionsabdeckung (80) bereitgestellt ist; und
ein Sperrstück (63) auf einem Ende des Blasrohrs (60) bereitgestellt ist, wobei das Sperrstück (63) fähig ist, durch die Drehung der Diffusionsabdeckung (80) in den Vorsprungteil (84) einzugreifen, während die Diffusionsabdeckung (80) das Ende des Blasrohrs (60) berührt, um die Diffusionsabdeckung (80) abnehmbar an dem Ende des Blasrohrs (60) zu befestigen.

4. Nebelgebläse (10) nach Anspruch 3, wobei ein Flansch (64) in der vorderen Endseite des Blasrohrs (60) bereitgestellt ist, wobei ein Außendurchmesser des Flansches (64) größer als der der Diffusionsabdeckung (80) ist.

## Revendications

1. Brumisateur (10) pour pulvériser du liquide chimique, comprenant :
une tuyère (60) configurée pour permettre à de l'air fourni depuis un ventilateur (50) de s'écouler à travers et d'être évacué d'une extrémité avant de la tuyère (60), le liquide chimique étant pulvérisé en mélangeant le liquide chimique dans l'air s'écoulant à travers la tuyère (60) ; et
un recouvrement de diffusion (80) prévu dans l'extrémité avant de la tuyère (60) pour diffuser radialement vers l'extérieur l'air contenant le liquide chimique qui est en train d'être évacué de la tuyère (60),
dans lequel le recouvrement de diffusion (80) inclut :
une ailette de direction d'écoulement (81) configurée pour diriger l'écoulement de l'air contenant le liquide chimique qui est en train d'être évacué de la tuyère (60) ; **caractérisé par**
une ailette de diffusion (82) configurée pour incliner radialement vers l'extérieur avec un angle supérieur à la surface du recouvrement de diffusion (80) à celui des ailettes de direction (81) et pour guider radialement vers l'extérieur une partie de l'air contenant le liquide chimique.

2. Brumisateur selon la revendication 1, dans lequel :
une partie venturi (72) ayant une forme approximativement cylindrique est prévue dans la tuyère (60) près de l'extrémité avant, la partie venturi (72) mélangeant le liquide chimique dans l'air par effet venturi ; et
l'ailette de diffusion (82) est formée le long d'une circonférence correspondant à un prolongement d'une surface interne de la partie venturi (72) ayant la forme approximativement cylindrique.

3. Brumisateur (10) selon la revendication 1 ou 2, dans lequel :
une partie saillante (84) s'étendant radialement est prévue dans une circonférence externe du recouvrement de diffusion (80) ; et
une pièce de verrouillage (63) est prévue sur une extrémité de la tuyère (60), la pièce de verrouillage (63) étant capable de s'engager avec la partie saillante (84) en faisant tourner le recouvrement de diffusion (80) tandis que le recouvrement de diffusion (80) vient en contact avec l'extrémité de la tuyère (60) pour relier de manière amovible le recouvrement de diffusion (80) à l'extrémité de la tuyère (60).

4. Brumisateur (10) selon la revendication 3, dans lequel une bride (64) est prévue dans le côté d'extrémité avant de la tuyère (60), un diamètre externe de la bride (64) étant supérieur à celui du recouvrement de diffusion (80).
